(19) **Europäisches Patentamt / European Patent Office / Office européen des brevets**

(11) **EP 3 940 925 A1**

(12) **EUROPEAN PATENT APPLICATION**

(43) Date of publication:
**19.01.2022 Bulletin 2022/03**

(21) Application number: **20186587.0**

(22) Date of filing: **17.07.2020**

(51) International Patent Classification (IPC):
**H02K 3/24** (2006.01) **H02K 9/00** (2006.01)

(52) Cooperative Patent Classification (CPC):
**H02K 3/24; H02K 9/00;** H02K 2203/12

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universiteit Gent**
**9000 Gent (BE)**

(72) Inventors:
• T'JOLLYN, Ilya
  **9000 Gent (BE)**
• NONNEMAN, Jasper
  **9000 Gent (BE)**
• DE PAEPE, Michel
  **9000 Gent (BE)**

(74) Representative: **DenK iP bv**
**Leuvensesteenweg 203**
**3190 Boortmeerbeek (BE)**

(54) **EFFICIENT COOLING OF ELECTROMAGNETIC COILS**

(57) An electromagnetic device is described. The device comprises a conductor having an outer electrical insulation layer, the conductor being wound in turns to form a winding. The conductor is being adapted to form, after winding, a plurality of free spaces between adjacent turns of the winding, said free spaces forming a plurality of coolant channels. The device furthermore comprises a housing surrounding the winding, wherein the housing comprises an inlet for providing a cooling fluid to the plurality of coolant channels, an outlet for extracting the cooling fluid from the plurality of coolant channels, and the housing being configured for containing the cooling fluid and allowing passage of the cooling fluid through the plurality of coolant channels.

**FIG. 1**

EP 3 940 925 A1

**Description**

**Field of the invention**

The invention relates to the field of windings in electric machines. More specifically it relates to the device and method of cooling one or more windings in an electric machine using coolant channels in between wound conductors forming the one or more windings.

**Background of the invention**

There is a constant strive to improve the efficiency of electric machines, e.g. electric generators to generate electrical power from mechanical power, and electric motors to generate mechanical power from electrical power. Inside such a machine, a conductor is wound multiple times around a stator and/or rotor, thus forming a winding. Such a winding carries the generated or applied electrical current. The conductor is e.g. made of copper. This produces heat, due to the inherent joule losses. To achieve higher efficiency and higher peak power densities in such machines, the windings need to be cooled. The challenge here is to keep the thermal resistive path from the heat source to the cooling medium as low as possible.

Various methods are commonly used in industry to cool such machines. In one method, cold air is used to cool the windings. In another method, liquid cooling is used, in which a liquid is circulated in a cooling circuit between the electric machine and the cooler. Some implementations of these methods are proposed. In one implementation, the cooling is done at the end windings, i.e. the portions of the windings extending axially beyond the stator and/or rotor core. In another implementation, for electric machines with concentrated windings positioned around stator poles, the cooling tubes are inserted in between windings of consecutive stator poles. Both of these implementations, however, have only part of the windings cooled, while other parts are not. The thermal resistive path from the individual conductor to the cooling medium is, therefore, too resistive, because it is too long or comprises too much high thermal resistive components (thermally low conductive material, or intermediate interfaces), to obtain effective cooling.

Further implementations are suggested in the art. European patent application EP1560313A2 discloses a cooling system for an electric machine, in which a plurality of cooling tubes are adapted to be between a plurality of windings made of Litz wire. Similarly to the previous implementations, only some of the outer surfaces of the winding are cooled. The heat generated by the conductors within the Litz wire of the windings is therefore trapped, and results in higher temperatures. C. Wohlers et al. in "design and direct liquid cooling of tooth-coil windings", Electrical Engineering, 100(4), 2299-2308 propose another implementation wherein electromagnetic coils are 3D printed. The coils are realized by printing individual conductors in such a way that cooling channels are positioned in between the individual conductors. To accommodate such cooling channels, the conductors making up the coils have a particular 3D printed shape. Although this results in good cooling, the use of a non-standard coil shape increases the complexity of such an implementation. Consequently, there is still room for improvement.

**Summary of the invention**

It is an object of the present invention to provide electromagnetic devices with effective cooling as well as to provide efficient methods for cooling electromagnetic coils and methods for manufacturing such electromagnetic coils. It is an advantage of embodiments of the present invention that cooling can be done as close as possible to the heat source without the presence of a number of intermediate interfaces.

It is an advantage of embodiments that one or more portions of each conductor is directly cooled.

It is an advantage of embodiments of the present invention that the fill factor of the winding is not negatively impacted by the cooling.

The above object is obtained by devices and methods according to the present invention.

The present invention relates to an electromagnetic device comprising a conductor having an outer electrical insulation layer, the conductor being wound in turns to form a winding. It is characterized in that the conductor is being adapted to form, after winding, a plurality of free spaces between adjacent turns of the winding, said free spaces forming a plurality of coolant channels. The device furthermore comprises a housing surrounding the winding, wherein the housing comprises an inlet for providing a cooling fluid to the plurality of coolant channels, an outlet for extracting the cooling fluid from the plurality of coolant channels. The housing is being configured for containing the cooling fluid and allowing passage of the cooling fluid through the plurality of coolant channels.

Where in embodiments of the present invention reference is made to free spaces, reference is made to spaces where a fluid can pass. This is in contrast to the cooling of e.g. a high-power dense application wherein a resin is used to fill the spaces in between the conductors. It is an advantage of embodiments of the present invention that use can be made of conventional conductors for making a winding, providing effectively cooled windings without increasing the complexity of the manufacturing process significantly. It is an advantage of embodiments of the present invention that winding of the conductor can be easily performed and that this results in free spaces in between said conductors. In some embodiments, the free spaces may be dimensioned spaces having a hydraulic diameter being smaller than 1mm. The free spaces may be dimensioned by selecting an appropriate cross-section and/or by selecting an appropriate winding technique. The hydraulic diameter thereby is defined as the ratio of four times the channel cross-sectional area divided by the channel cross-sectional perimeter. It may in some embodiments be micrometer dimensioned spaces. It was surprisingly found that such free spaces can act advantageously as cooling channels in between portions of the conductor resulting in very effective cooling. In some embodiments, reference may be made to compact windings, whereby a plurality of free micrometer dimensioned channels are formed between portions of the conductors.

Where in embodiments of the present invention reference is made to a housing, the latter may also refer to a sealing applied around the windings, whereby the sealing allows passage of cooling fluid through the plurality of channels. The housing may be formed in any suitable manner, such as for example also by applying a potting material, provided it provides an inlet and outlet and allows containing the cooling fluid and allows passage of the cooling fluid through the plurality of channels.

Where in embodiments of the present invention reference is made to a fill factor of a winding, reference is made to the ratio of the volume taken up by the conductor and insulation with respect to the total volume of the winding (being the volume of the conductor, insulation and coolant channels).

It is an advantage of embodiments of the present invention that the channel body provides an easy interfacing to connect to the cooling circuit.

It is an advantage of embodiments of the present invention that the cooling occurs as close as possible to the conductor in which the heat is generated so that thermal interface resistances are limited. It is an advantage of embodiments of the present invention that a large surface area with the conductor is available for heat transfer, the surface area being the outer surfaces of the portions of the conductors in the winding forming the channels between the portions of the conductor in the winding.

It is an advantage of embodiments of the present invention that an increase of thermal conductance can be obtained, e.g. an increase of thermal conductance up to 6 times or more can be obtained, compared to conventional cooling, e.g. based on a water jacket cooling.

It is an advantage of embodiments of the present invention that no electromagnetic losses occur in said channels, since the channels are formed by free spaces between the conductor and are not introduced as pipes made of metallic material.

In some embodiments, the conductor may be wound and shaped to have a fill factor of the winding of at least 30%, for example at least 60%, for example at least 75%, for example at least 90%.

In particular embodiments, the conductor may be wound and shaped to have a fill factor of the winding of at most 98%, for example at most 95%, for example at most 80%. The winding may be a concentrated winding. It is an advantage of embodiments of the present invention that, e.g. for a conductor having a substantially circular cross-section, the fill factor can be 90.7%, corresponding with perfect cylindrical packing.

It is an advantage of the embodiments of the present invention, that the winding may be a preformed winding. A further advantage is that the preformed winding may include the inlet and outlet structures. The above allowing for an efficient assembly of the electrical machine.

It is an advantage of embodiments of the present invention that the very low hydraulic diameter of said channels results in a high heat transfer coefficient.

The conductor may have a substantially circular, oval or elliptical cross-section.

The winding may have an axial portion and end winding portions and the inlet and the outlet may be positioned at the end winding portions.

The coolant channels may be microfluidic channels.

It is an advantage of embodiments of the present invention that a high convective heat transfer coefficient of the fluid flowing within the channel can be obtained for the cooling of the winding.

The winding of the coil may be configured for inducing microfluidic channels resulting in a Nusselt number for the system higher than 0.9, e.g. between 0.9 and 7.6.

The winding of the coil may be configured for inducing a laminar flow in the plurality of microfluidic channels.

It is an advantage of embodiments of the present invention that a relatively low pressure drop is realized in the cooling channel.

It is an advantage of embodiments of the present invention that due to the effective cooling process, a high current density is achieved without degrading the performance of said electric machine.

It is an advantage of embodiments of the present invention that due to the effective cooling process close to the thermal source, hot spots are avoided, such hot spots refer to local high temperatures degrading the insulation of the conductor and as such reducing the reliability of said electric machine.

The housing may comprise tape wrapped around the winding. According to some embodiments, the tape may be polyimide tape.

The housing may be configured to be leakage free and to withstand a fluid pressure from the cooling fluid that is passed through the plurality of coolant channels. It is an advantage of embodiments of the present invention that said channel body around said windings withstands said cooling fluid pressure, e.g. against a cooling fluid pumping pressure that is applied.

It is an advantage of embodiments of the present invention that said channel body can be resistant to vibrations and forces. The housing may be formed by or may comprise potting material and the fluid inlet and/or the fluid outlet may be formed in the potting material.

The coil may comprise, aside the housing, additional flow limiting means for preventing axial flow of the cooling fluid. The additional flow limiting means may be tape.

When in use, the cooling fluid may be in direct thermal contact with said insulation layer on the outside of the conductor. The coil may be configured for allowing cooling being a one-phase cooling or a two-phase cooling. The cooling fluid used may be a dielectric. The cooling fluid used may be oil.

The winding may have an axial portion and end winding portions, wherein the inlet and the outlet are positioned at the end winding portions and wherein the housing is configured for accommodating cooling fluid to pass through the plurality of channels along portions of the conductor in the axial portion.

The present invention also relates to an electric system or appliance comprising one or more windings as described above. The electric system may be an electromagnetic system. It is an advantage of embodiments of the present invention that effective cooling can be obtained for electric actuators requiring a high continuous power density, a high peak power density or a high efficiency. The electrical actuator may be a motor or a generator. Embodiments of the present invention advantageously find their application in electric vehicles, electric aviation, etc.

The electric system may be a concentrated pole electric actuator comprising a cooling circuit and a plurality of electromagnetic devices connected in parallel to the cooling circuit.

The present invention also relates to an electric appliance comprising an electric actuator as described above.

The electric appliance may be an electric vehicle.

The present invention furthermore relates to a method for manufacturing an electromagnetic device, the method comprising,

- winding a conductor in turns to obtain a winding, the conductor being adapted to form, after winding, a plurality of free spaces being formed between turns of the winding, said free spaces forming a plurality of coolant channels, and
- creating a housing surrounding the winding, the housing comprising an inlet for providing a cooling fluid to the plurality of channels, an outlet for extracting the cooling fluid from the plurality of channels, wherein the housing is configured for containing the cooling fluid and allowing passage of the cooling fluid through the plurality of channels.

Creating the housing may comprise embedding a header structure or temporary dummy structure at the position of the inlet or the outlet and applying a potting material for forming the inlet or the outlet in the housing.

The inlet and/or the outlet may be positioned at the end of the windings. The method may comprise using a sacrificial component that is removed, thus forming the inlet and the outlet. Alternatively, it also may comprise making use of a pre-shaped component comprising an inlet and an outlet that remains in the system.

Creating a housing surrounding the winding may include providing a tape around the winding.

The present invention also relates to a method for cooling a coil in an electric system, said method comprising providing a cooling fluid to an inlet and passing the cooling fluid through channels formed by a plurality of free spaces in between parallel portions of a conductor wound as a winding, so that the cooling fluid is in direct contact with the turns of the conductor. The method may comprise inducing a laminar flow in the free spaces.

Particular and preferred aspects of the invention are set out in the accompanying independent and dependent claims.

Features from the dependent claims may be combined with features of the independent claims and with features of other dependent claims as appropriate and not merely as explicitly set out in the claims. Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1 illustrates a schematic overview of an electromagnetic coil according to an embodiment of the present invention.

FIG. 2 illustrates a perspective view of an electromagnetic device according to an embodiment of the present invention.

FIG. 3 illustrates a section taken along the line III-III of FIG. 2 and a zoomed area illustrating perfectly stacked cylinders forming intermediate coolant channels thus illustrating the principles as used in embodiments according to the present invention.

FIG. 4 illustrates a setup of a winding and housing in a picture, as can be used in an embodiment according to the present invention.

FIG. 5 illustrates a measured and modelled pressure drop in function of flow rate for different coolant temperatures, thus illustrating features of embodiments according to the present invention.

FIG. 6 illustrates a measured and modelled winding temperature as function of the flow rate for different heat dissipation rates, thus illustrating features of embodiments according to the present invention.

FIG. 7 illustrate the product of the heat transfer coefficient and the area as well as the flow rate as a function of conductor deformation for a fixed pressure drop, thus illustrating features of embodiments according to the present invention.

FIG. 8 illustrates the temperature of the winding and coolant outlet as a function of the conductor deformation for a fixed pressure drop, thus illustrating features of embodiments according to the present invention.

FIG. 9 illustrates the copper losses as a function of the winding fill factor for a fixed pressure drop, thus illustrating features of embodiments according to the present invention.

FIG. 10 illustrates the product of the heat transfer coefficient with the area as well as the flow rate as function of the winding fill factor for a fixed pressure drop, thus illustrating features of embodiments according to the present invention.

FIG. 11 illustrates the temperature of winding and coolant outlet as a function of the winding fill factor for a fixed pressure drop, thus illustrating features of embodiments according to the present invention.

FIG. 12 illustrates the product of the heat transfer coefficient with the area as well as the flow rate as function of the conductor diameter for a fixed pressure drop, thus illustrating features of embodiments according to the present invention.

FIG. 13 illustrates the temperature of the winding and coolant outlet as a function of the conductor diameter for a fixed pressure drop, thus illustrating features of embodiments according to the present invention.

FIG. 14 illustrates the temperature of the winding and coolant outlet as a function of the Nusselt number for a fixed pressure drop, thus illustrating features of embodiments according to the present invention.

FIG. 15 illustrates the temperature of the winding and coolant outlet as a function of the friction factor constant for a fixed pressures drop, thus illustrating features of embodiments according to the present invention.

FIG. 16 illustrates the nominal net power and net power at nominal efficiency as a function of the conductor deformation parameter for a fixed pressure drop, thus illustrating features of embodiments according to the present invention.

FIG. 17 illustrates the conductor and coolant outlet temperature for a motor with nominal efficiency as a function of the conductor deformation parameter for a fixed pressure drop, thus illustrating features of embodiments according to the present invention.

FIG. 18 illustrates the nominal net power and efficiency at nominal winding temperature as a function of the conductor deformation parameter for a fixed pressure drop, thus illustrating features of embodiments according to the present invention.

FIG. 19 illustrates the nominal efficiency and efficiency at nominal winding temperature for a motor with nominal winding temperature as a function of the conductor deformation parameter for a fixed pressure drop, thus illustrating features of embodiments according to the present invention.

FIG. 20 to FIG. 23 illustrates a first embodiment of a motor including at least one, e.g. several electromagnetic devices in accordance of embodiments of the present invention, for example one per winding.

FIG. 24 to FIG. 27 illustrates a second embodiment of a motor including an electromagnetic device for several windings according to embodiments of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to an electromagnetic device. Such a device may be used for stator or rotor applications in an electric motor, although embodiments of the present invention are not limited thereto and use in other type of electric actuators also is envisaged as well as use in transformers for example. The device typically comprises a conductor having an outer electrically insulating layer and being wound in turns to form a winding. According to embodiments of the present invention, the device is being adapted to form, after winding, a plurality of free spaces being formed between adjacent turns of the winding, said free spaces forming a plurality of coolant channels. The free spaces may for example be formed between parallel portions of the conductor positioned in an axial part of the winding. The free spaces forming a plurality of channels. Such channels may be microchannels, although embodiments are not limited thereto and channels with a hydraulic diameter being larger than 1mm are for example also envisaged. According to embodiments of the present invention, the device furthermore comprises a housing surrounding the winding, wherein the housing comprises an inlet for providing a cooling fluid to the plurality of channels and an outlet for extracting the cooling fluid from the plurality of channels. The inlet and outlet may for example be positioned at end winding portions, i.e. away from the axial portion of the winding, although embodiments are not limited thereto. The housing is configured for containing the cooling fluid and for allowing passage of the cooling fluid through the plurality of channels. The present invention may be especially advantageous for a coil having a high fill factor, such as for example having a fill factor of the conductor in the winding of at least 60%, for example at least 75%, for example at least 90%, although embodiments are not limited thereto.

In embodiments according to the present invention, the conductor may have for example a well-known shaped cross section, such as for example a substantially circular cross section, or an oval or elliptical cross section, although the present invention is not limited thereto. In some embodiments, the conductor may have a diameter between 0.2mm and 2mm, for example between 0.2mm and 0.5mm, although the diameter is not limiting for the present invention.

The housing according to embodiments of the present invention may be made in any suitable way. It may be formed from potting material whereby the inlet and the outlet for the cooling fluid are formed in the potting material and where the winding is first sealed to avoid the potting material filling the free spaces for example by polyimide tape, the housing may also be formed by a lost mould method where a substance is first used to fill the free spaces and form the inlet and outlet, next potting material is used to form the housing and finally the original substance is removed to create the coolant channels, it may be formed by spray coating a layer around the winding and additional inserts for the inlet and outlet, the housing may also be formed by placing a plastic layer or liner around the winding while also forming the inlet and outlet which is subsequently sealed by plastic (thermal or solvent) welding, .... In another embodiment, it may be formed by sealing the stator part including the windings from the rotor part, more specifically by the addition of sealing plates at the bottom of the winding slots and hollow cylinders at both end faces of the stator iron, with one end space serving as an inlet and the other end space as an outlet, which allow containing the cooling fluid and allow passage of the cooling fluid through the plurality of channels of at least one winding. The latter implementation of the embodiment is not only limited to concentrated windings but can also be used for distributed windings. According to embodiments of the present invention, the housing typically is configured to be leakage free and to withstand a fluid pressure from the cooling fluid that is passed between parallel parts of the conductor during cooling. Nevertheless it may be clear that in some embodiments small leakages may be allowable.

According to embodiments of the present invention, advantageously, when in use, the cooling fluid is in direct thermal contact with said insulation layer on the outside of the conductor.

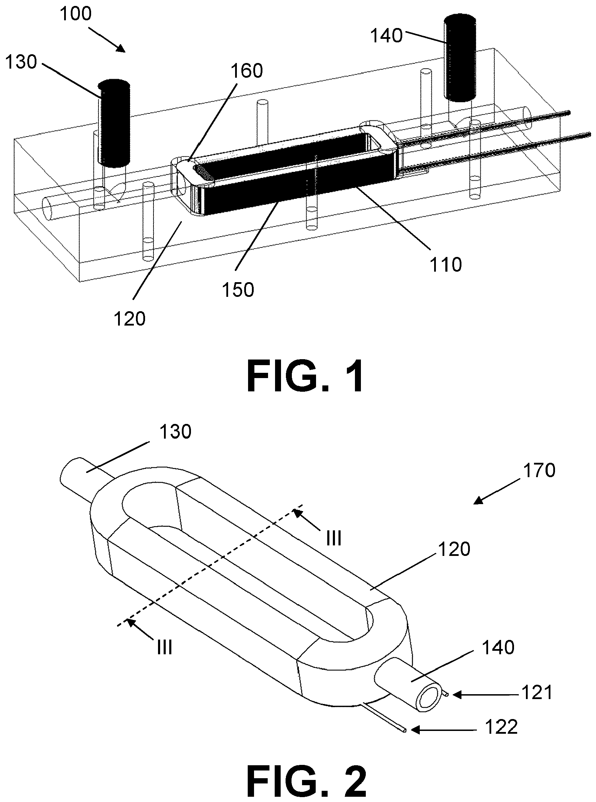

FIG. 1 and FIG. 2 illustrate schematic overviews of electromagnetic coils 100, 170 according to embodiments of the present invention. The electromagnetic coil 100 shown, illustrates the conductor 110 being wound to form a winding. In between the different portions of the conductor 110 the free spaces forming the plurality of channels are present (not visible in FIG. 1). The electromagnetic coil 100 furthermore shows the housing 120 and the inlet 130 and outlet 140 for the cooling fluid. Furthermore parallel portions (axial portions) 150 and end portions 160 are shown. FIG. 2 shows a perspective view of an electromagnetic device 170 formed by a wound conductor with a housing in accordance of an embodiment of embodiments of the present invention. The housing 120 includes an inlet 130 and outlet 140. It is noted that the inlet 130 and outlet 140 can be implemented interchangeably. The housing further includes electrical connections 121, 122 for the conductor in the housing 120.

By way of illustration, embodiments of the present invention not being limited thereto, a study of the cooling of a winding according to an embodiment of the present invention is further discussed below. The latter further illustrates features and advantages of embodiments of the present invention.

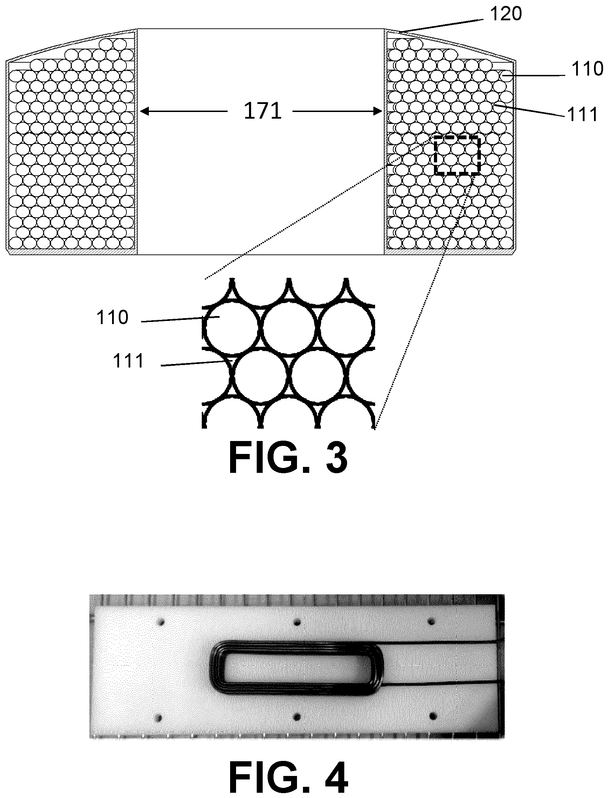

FIG. 3 shows, in the upper drawing, the cross section III-III indicated in FIG. 2, illustrating the housing 120 and the conductor 110, as well as the gap 171 formed by the shape of the winding of the conductor 110. The lower drawing is a zoomed portion of the winding, showing a particular stacking of the wound conductor 110 leaving coolant channels 111 in between.

To evaluate the proposed winding cooling method, the temperature of the winding was determined, as well as the effect on the power and efficiency of the motor. First the thermal resistance from the conductor to the cooling fluid was determined. The effect of the temperature rise of the coolant in the flow direction on the conductor temperature was also studied. The pressure drop is estimated as function of the flow rate through the winding. When limiting the pressure drop to a set value, the winding temperature was determined as a function of the winding heat dissipation.

To estimate the temperatures in the copper winding, a lumped parameter model was made for the heat transfer from the winding to the cooling fluid. It is assumed that the Joule losses result in a uniform volumetric heat dissipation in the conductors. With the assumption of a 2D temperature profile (infinitely long conductor) and axisymmetric cooling, the temperature profile T in the conductor can be described as a function of the distance from the centerline r

$$T(r) = T_b + \frac{\dot{Q}_c}{4\,\pi\,k_c\,L_{tot}}\left(1 - \left(\frac{2r}{D_c}\right)^2\right)$$

In this equation, $T_b$ is the temperature at the boundary, $\dot{Q}_c$ is the conductor heat dissipation, $k_c$ is the conductor thermal conductivity, $L_{tot}$ is the total conductor length and $D_c$ is the diameter of the conductor. The equivalent thermal resistance in the conductor $R_c$ can be defined as:

$$R_c = \frac{T(0) - T_b}{\dot{Q}_c} = \frac{1}{4\,\pi\,k_c\,L_{tot}}$$

An equivalent resistance for the insulation $R_i$ can be defined as follows:

$$R_i = \frac{\ln\left(\frac{D_i}{D_c}\right)}{2\pi k_i L_{tot}}$$

where $D_i$ is the outer diameter of the conductor with insulation and $k_i$ is the insulation thermal conductivity. For the convective thermal resistance, the flow is assumed to be laminar, since the channels are very small. This assumption will be checked and confirmed in the processing of the simulation results. The heat transfer in fully developed laminar flow is characterized by a constant Nusselt number, independent of any flow parameters. Estimations of the thermal development length indicate that the flow is not fully developed during the entire flow length, which would result in higher Nusselt numbers and heat transfer coefficients. Using the fully developed Nusselt number will therefor result in an overestimation of the winding temperature, making it a safe assumption. For perfect cylindrical stacking, as in FIG. 3, the flow channels 111 are cusped channels with three sides, for which the Nusselt number Nu for a constant temperature boundary condition is equal to 0.916. The assumption of a constant temperature boundary will be discussed in a subsequent paragraph. A real-life winding is never perfectly stacked, so a variety of channel geometries can be present. This can cause a variation in Nusselt number from 0.916 to 7.541 (infinitely long rectangular cross section). The effect of the possible variation will be discussed later. From the Nusselt number, the thermal resistance of convection in the fluid $R_f$ can be determined:

$$R_f = \frac{1}{h\,A} = \frac{D_h}{k_f\,Nu\,A}$$

with h the convective heat transfer coefficient, A the total surface area in contact with the fluid, $D_h$ the hydraulic diameter of the channel and $k_f$ the fluid thermal conductivity. For a perfect stacking, the surface area $A_{perfect}$ can be determined as:

$$A_{perfect} = \pi D_i L_{tot}$$

If deformation occurs, part of the outer surface will be in contact with the neighbouring conductor and not the entire surface is in contact with the fluid. This effect can be taken into account by adding a parameter $\varepsilon$, which ranges between 0 and 1, to determine the actual surface area as:

$$A = (1 - \epsilon)A_{perfect}$$

The hydraulic diameter is defined as:

$$D_h = \frac{4S}{P}$$

In this equation, S is the cross-sectional channel area and P is the perimeter. With some manipulations, the hydraulic diameter can be determined as:

$$D_h = \frac{4\left(\frac{1}{FF} - 1\right)\pi D_i^2/4}{(1 - \epsilon)\pi D_i} = \left(\frac{1}{FF} - 1\right)\frac{D_i}{1 - \epsilon}$$

with FF the fill factor of the winding, which is defined as the ratio of the volume taken up by the conductor and insulation to the total volume of the winding (conductor, insulation and, in this case, fluid volume). The convective thermal resistance can then be determined as:

$$R_f = \frac{\frac{1}{FF} - 1}{\pi \, (1 - \epsilon)^2 \, k_f \, Nu \, L_{tot}}$$

The three thermal resistances times the length of the conductor can now be calculated when fixing the conductor properties (geometry and thermal conductivity), the fill factor, the parameter ε and the thermal conductivity of the fluid. Reference conductor properties are gathered from Siesing et al. in "Thermal properties on high fill factor electrical windings : Infiltrated vs non infiltrated," in 2014 International Conference on Electrical Machines (ICEM), 2014, and are shown in Table 1. ATF oil is used as a fluid, the properties are given in Table 2. For a first estimation, the fill factor is assumed to be 50% and the parameter ε equal to 0. Table 3 shows the results of the calculations. It is clear that the thermal resistance due to convection in the fluid is the dominant thermal resistance.

Table 1 : Winding material properties

| Conductor (copper) | Thermal conductivity [W/mK] | $k_c$ | 385 |
| | Diameter [m] | $D_c$ | 0.0003 |
| Insulation (polyamideimide) | Thermal conductivity [W/mK] | $k_i$ | 0.26 |
| | Diameter [m] | $D_i$ | 0.000342 |

Table 2 : ATF oil properties

| $k_f$ [W/mK] | $\rho$ [kg/m³] | $c_p$ [J/kgK] | $\nu$ [m²/s] |
|---|---|---|---|
| 0.16 | 853 | 2018 | 35.38 $10^{-6}$ |

Table 3 : Thermal resistances times length in conductor, insulation and fluid

| $L_{tot} R_c$ [Km/W] | $L_{tot} R_i$ [Km/W] | $L_{tot} R_f$ [Km/W] |
|---|---|---|
| 0.4343 | 168.5 | 4239.0 |

Next to the temperature differences due to heat transfer which can be calculated from the thermal resistances, the heating of the coolant along the length of the flow path will have an influence on the temperature of the winding. The heat dissipation in the conductors is nearly uniform (assuming the temperature variation and the resulting variation in electrical resistance is small). However, since the thermal resistance in the direction of the conductor is very low compared to that perpendicular to the direction of the conductor, temperatures along the length of the conductor will be nearly constant. A constant temperature boundary is thus the best approximation for the heat transfer problem, which results in the following expression:

$$\dot{Q}_c = \frac{LMTD}{R_{tot}} = \frac{T_{f,o} - T_{f,i}}{\ln\left(\frac{T_c - T_{f,i}}{T_c - T_{f,o}}\right) R_{tot}}$$

with LMTD the logarithmic mean temperature difference, $R_{tot}$ the total thermal resistance equal to the sum of the conductor, insulation and convective thermal resistance divided by the number of stator windings, $T_{f,o}$ the outlet coolant temperature and $T_{f,i}$ the inlet coolant temperature. The temperature difference between inlet and outlet temperature of the cooling fluid is determined as:

$$T_{f,o} - T_{f,i} = \frac{\dot{Q}_c}{\rho \dot{V} c_p}$$

In this equation, $\rho$ is the density of the fluid, $\dot{V}$ is the volumetric flow rate and $c_p$ is the specific heat capacity of the fluid. Combining the previous two equations results in:

$$R_{tot}\rho\dot{V}c_p = \cfrac{1}{\ln\left(\cfrac{1}{1 - \cfrac{\dot{Q}_c}{\rho\dot{V}c_p(T_c - T_{f,i})}}\right)}$$

Rewriting the previous expression returns the following equation:

$$T_c = T_{f,i} + \cfrac{\cfrac{\dot{Q}_c}{\rho\dot{V}c_p}}{1 - \exp\left(-\cfrac{1}{\rho\dot{V}c_p R_{tot}}\right)}$$

The last equation can be simplified by using an equivalent thermal resistance $R'$ between the conductor temperature and the coolant inlet temperature, taking into account the temperature rise of the coolant:

$$\dot{Q}_c = \frac{T_c - T_{f,i}}{R'}$$

The equivalent resistance is defined by the two previous equations:

$$R' = \frac{1}{\rho\dot{V}c_p}\left[1 - \exp\left(-\frac{1}{\rho\dot{V}c_p R_{tot}}\right)\right]^{-1}$$

Although the heat transfer coefficient is independent of the flow rate, due to the heating of the coolant, the winding temperature will be a function of the coolant flow rate. The coolant flow rate is limited by the pressure drop, which has to be sufficiently low to assure that a standard pump will be able to provide the desired flow rate. The pressure drop of the flow through the winding can be estimated by determining the pressure drop $\Delta p$ of a straight channel:

$$\Delta p = \frac{\rho v^2}{2} f \frac{L}{D_h}$$

In this equation, $v$ is the average velocity, $f$ is the Darcy friction factor and $L$ is the length of the channel. The length of the channel can be related to the total conductor length and the number of turns $N$:

$$L_{tot} = 2NL$$

The number of conductor turns can be calculated from the conductor diameter, the winding cross-sectional area $S_w$ and the fill factor:

$$N = \frac{S_w FF}{\pi D_i^2 / 4}$$

The friction factor for fully developed laminar flow in a channel with a three-sided cusped cross section is determined as:

$$f = \frac{26.012}{Re} = 26.012 \frac{v}{v \, D_h}$$

Where $Re$ is the Reynolds number and $v$ is the kinematic viscosity. The constant is a function of the cross-sectional geometry and can vary from 26.012 to 96 (infinitely long rectangular cross section), the influence of which will be discussed below. The pressure drop can be recalculated as:

$$\Delta p = 26.012 \frac{\rho v}{2} \frac{L}{D_h^2} \, v$$

The velocity can be related to the flow rate by the number of stator poles $N_S$ and the winding cross-sectional area $S_w$:

$$v = \frac{\dot{V}}{2 N_S \, (1 - FF) \, S_w}$$

If the geometry of the winding and the fluid properties are known, the pressure drop can be estimated from the flow rate and vice versa. For the following simulations, a fixed pressure drop of 0.5 bar is used as a boundary condition, which is an acceptable value for a motor cooling circuit.

To validate the modelling as described above, an experimental setup was build. A winding with 26 turns using a conductor with diameter 2.9 mm was used. The length of one full turn of the conductor is equal to 212 mm. This conductor was carefully wound to approach a perfect cylindrical stacking. The winding was taped with Kapton and placed in a milled POM housing (see FIG. 4) with silicon mastic added to seal the gaps between winding and housing. With the Kapton tape preventing the mastic from entering the gaps between the individual conductors, these are kept free as flow passages. A 38.24% water-glycol mixture is used as coolant, of which the inlet and outlet temperatures and pressures and the volume flow rate are measured. Heat dissipation in the coil is provided by a DC source capable of delivering up to 120 A. The resistance of the winding is measured, which is related to the average temperature of the winding by a calibration done beforehand.

Two inputs are unknown for the model: the fill factor of the winding and the conductor deformation parameter. These two values were fitted to the 57 measurement points taken, which results in a fill factor of 91.9% and a conductor deformation parameter of 0.347. The fill factor was higher than that of a perfect cylindrical packing (90.7%), which can be explained by the conductor deformation and by the sealing of the flow channels at the outside of the winding by the Kapton tape.

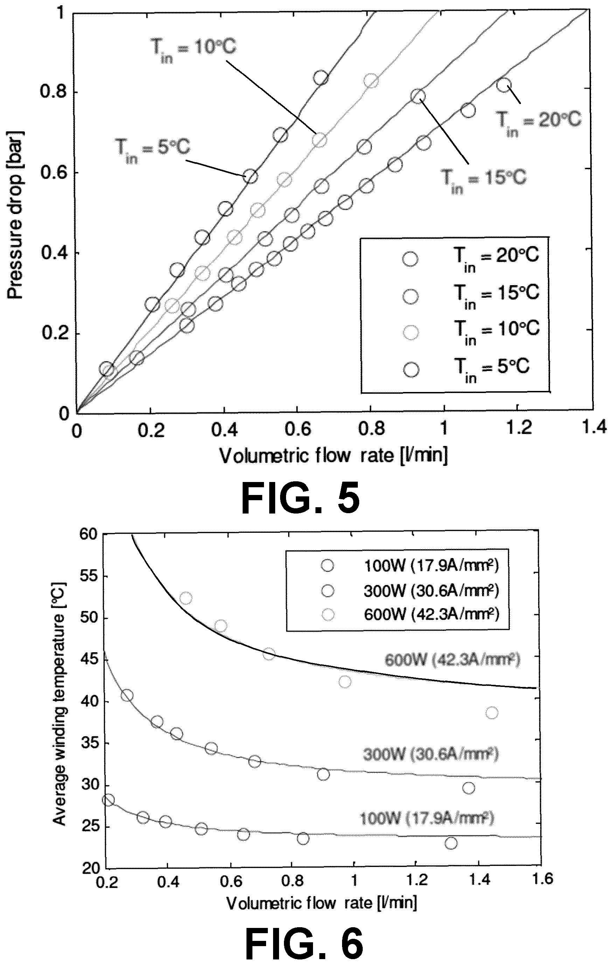

To validate the hydraulic model, the pressure drop was measured for flow rates varying from 0 to 1.2 l/min without any heat dissipation in the winding. The coolant temperature was varied in four levels (5 °C, 10 °C, 15 °C, 20 °C), as this will have an effect on the viscosity of the coolant, which will in turn influence the pressure drop. The results of the measurements and modelling are shown in FIG. 5. There is a clear linear relation between flow rate and pressure drop. Furthermore, the effect of temperature (and thus viscosity) changes was captured correctly.

Measurements with heat dissipation in the winding were performed to validate the thermal modelling. The heat dissipation (and current density) was varied in three steps: 100 W (17.9 A/mm$^2$), 300 W (30.6 A/mm$^2$) and 600 W (42.3 A/mm$^2$). The last step had some variation in heat dissipation around 600W, as the source was set to the maximal current (120 A), while the resistance of the winding varied with temperature from 41.4 $\Omega$ to 43.6 $\Omega$. The inlet temperature of the coolant is set to 20 °C while the flow rate is varied between 0 to 1.5 l/min. A comparison between the measured and modelled winding temperature is shown in FIG. 6. The measurements and model follow the same trend with respect to both flow rate and heat dissipation. At high flow rates, the model tends to overestimate the winding temperature. This is related to the conservative assumption of fully developed flow, resulting in higher thermal resistances at high flow rates, as explained above.

The effect on a switched reluctance motor performance was also measured. To be able to assess the performance of the proposed cooling techniques, the modelling performed by Nonneman et al. as described in "Advanced lumped parameter model for switched reluctance motors with high performance cooling" in International Heat Transfer Conference, Beijing, 2018 was used as a benchmark. The same geometry and boundary conditions of the switched reluctance motor (SRM) are used as inputs for the modelling in this example. The used parameters are shown in Table 4. Water jacket cooling is most common in industry and will be used as reference case. This reference case has a maximal winding temperature of 131.0 °C.

Table 4 : reference SRM characteristics

| Parameter | Symbol | Value |
|---|---|---|
| Flow length | $L$ | 122 mm |
| Winding area | $S_w$ | 193 mm$^2$ |
| Number of turns | $N_{ref}$ | 1051 |
| Number of stator poles | $N_S$ | 6 |
| Winding fill factor | $FF$ | 50% |
| Coolant inlet temperature | $T_{f,i}$ | 40 °C |
| Net power | $F_{net,ref}$ | 15 kW |
| Copper losses (at $T_{ref}$) | $\dot{Q}_{c,ref}$ | 242 W |
| Reference temperature | $T_{ref}$ | 110.7 °C. |
| Iron losses (stator and rotor) | $\dot{Q}_{Fe.ref}$ | 114 W |
| Windage losses | $\dot{Q}_w$ | 60.2 W |

The heat dissipation in the winding will be function of the winding temperature, as the electrical conductivity of the conductor increases with temperature. For a copper conductor in a temperature range of 20°C to 250°C, the influence of the temperature on the electrical conductivity $\rho^e$ can be described by:

$$\frac{\rho^e(T_c)}{\rho^e(T_{ref})} = 1 + \alpha(T_c - T_{ref})$$

In this equation, $T_{ref}$ is a reference temperature at which the resistivity is determined and $\alpha$ is the temperature coefficient, which is 0.0029 1/K for $T_{ref}$ equal to 110.7 °C (see Table 4). The heat losses in the winding can be calculated using the current through the winding $I$:

$$\dot{Q}_c = N_S \, \rho^e(T_c) \frac{2NL}{\pi D_c^2/4} I^2$$

For a constant number of stator poles and flow length, the heat losses in the winding can be related to the reference heat losses $\dot{Q}_{c,ref}$ calculated in Nonneman et al. by the following equation:

$$\dot{Q}_c = \dot{Q}_{c,ref}\left[1 + \alpha(T_c - T_{ref})\right] \frac{N}{N_{ref}} \frac{I^2}{I_{ref}^2} \frac{D_{c,ref}^2}{D_c^2}$$

In this equation, $N_{ref}$ is the number of conductor turns of the reference winding (Table 4), $I_{ref}$ is the nominal current of the reference motor and $D_{c,ref}$ is the diameter of the conductors used in reference motor (Table 1). The iron losses $\dot{Q}_{Fe}$ can be related to the number of conductor turns and the current:

$$\dot{Q}_{Fe} = \dot{Q}_{Fe,ref} \frac{NI}{N_{ref}I_{ref}}$$

In this equation, $\dot{Q}_{Fe,ref}$ are the reference iron losses in stator and rotor gathered from Nonneman et al. The heat dissipated in the iron is assumed to be transferred to a water jacket. Temperature dependency of the iron losses is not taken into account, as this dependency is smaller than the temperature dependency of the Joule losses. Similarly to the iron losses, the net power of the motor $P_{net}$ is assumed to vary linearly with the magnetic flux, which can again be related to the number of conductor turns and the current:

$$P_{net} = P_{net,ref} \frac{NI}{N_{ref}I_{ref}}$$

The reference net motor power $P_{net,ref}$ can be found in Table 4. From the net power and the heat dissipation, the motor efficiency $\eta$ can be calculated:

$$\eta = \frac{P_{net}}{P_{net} + \dot{Q}_c + \dot{Q}_{Fe} + \dot{Q}_w}$$

where $\dot{Q}_w$ are the windage losses given by Table 4.

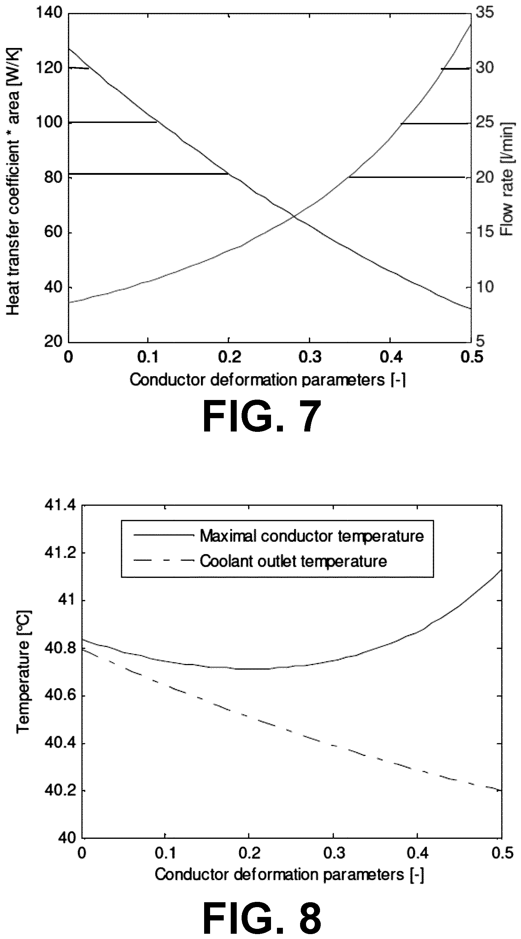

Conductor deformation is taken into account with the parameter $\varepsilon$, which determines the fraction of conductor surface which is not in contact with the coolant. For no deformation, this factor is equal to 0, indicating the entire outer surface of the conductors is in contact with the coolant. However, the conductor can deform, resulting in a contact area between different conductors, where no coolant is present. This parameter is varied from 0 to 0.5 to determine the influence of the conductor deformation. Two counteracting effects are present which are visualized in FIG. 7, which shows the variation of the convective heat transfer coefficient times the heat transfer area and the volumetric flow rate for a fixed pressure drop. With increasing deformation, the coolant channels will have a smaller perimeter for the same cross-sectional area, thereby increasing the hydraulic diameter. This results in a lower heat transfer coefficient, but also in a higher flow rate for an equal pressure drop. Furthermore, the reduced contact and thus heat transfer area results in a higher thermal resistance. The effect of the proposed cooling method on the temperature in the winding is shown in FIG. 8. The maximal temperature is reduced from 131.0 °C in the reference water jacket cooled simulation to a temperature ranging from 40.8 °C to 41.2 °C. This is a reduction of the temperature difference between hot spot and coolant ranging from about 80 to 110 times. The figure also indicates that both the temperature rise of the coolant and the thermal resistance have an effect on the temperature in the winding. The temperature in the winding first decreases with increasing deformation due to the higher flow rate. Only at higher deformation will the increasing thermal resistance become important, thereby again increasing the temperature. The reduction in temperature compared to the reference case also causes a decrease in Joule losses with about 20%. This relates to a reduction of about 12% on the total power losses. The effect of the deformation parameter on the losses and efficiency is smaller than 0.5%. In the following simulations, the factor is held constant to a moderate value of 0.25.

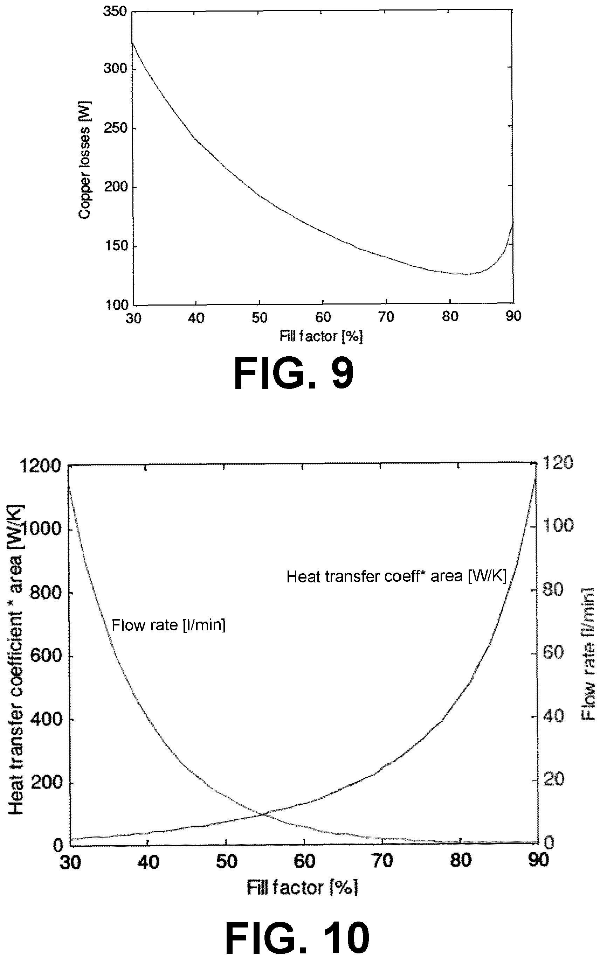

The winding fill factor is varied from 30% (randomly wound winding) to 90% (very carefully wound winding, close to upper limit). Unrelated to the proposed cooling method, the fill factor has an effect on the Joule losses. As more copper is present in the winding, more conductor turns can be made and the current can be decreased, which results in lower Joule losses as shown in FIG. 9 (at the highest fill factors, the Joule losses increase again due to the higher winding temperature). FIG. 10 plots the convective heat transfer coefficient times heat transfer area and volumetric flow rate as a function of the winding fill factor for a fixed pressure drop. The effect of the fill factor is the inverse of that of the conductor deformation parameter. A higher fill factor results in a smaller hydraulic diameter, increasing the heat transfer coefficient but decreasing the volumetric flow rate.

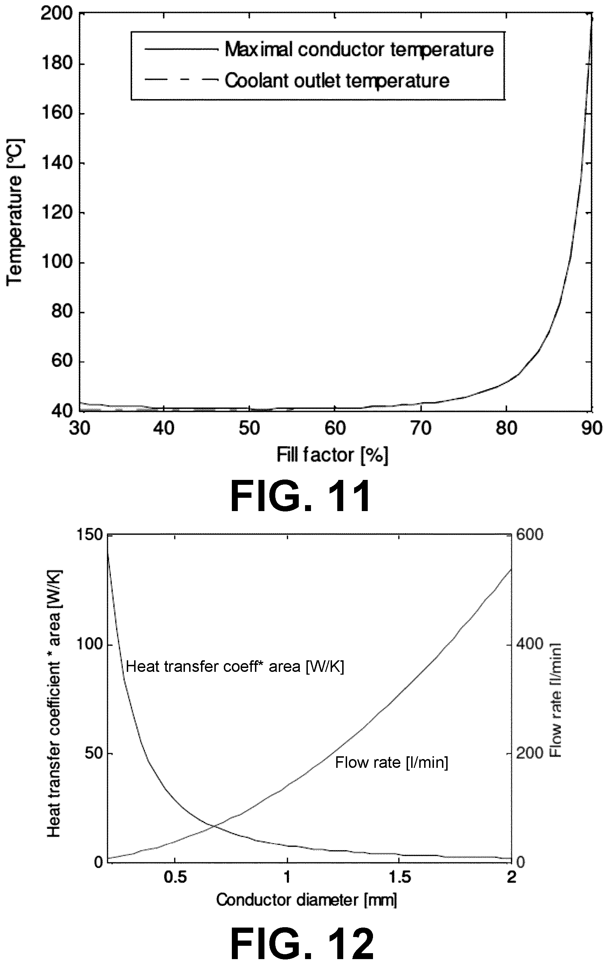

The trade-off between the two effects combined with the effect on the Joule losses can be observed in FIG. 11. At lower fill factors, the dominant effect is the increase in heat transfer coefficient and decrease in Joule losses, thereby lowering the conductor temperature. At moderate and higher fill factors, the flow rate will be very low and the increasing outlet temperature of the coolant will be the dominant factor determining the conductor temperature. For a fill factor lower than 85%, the maximal conductor temperature stays below 72 °C.

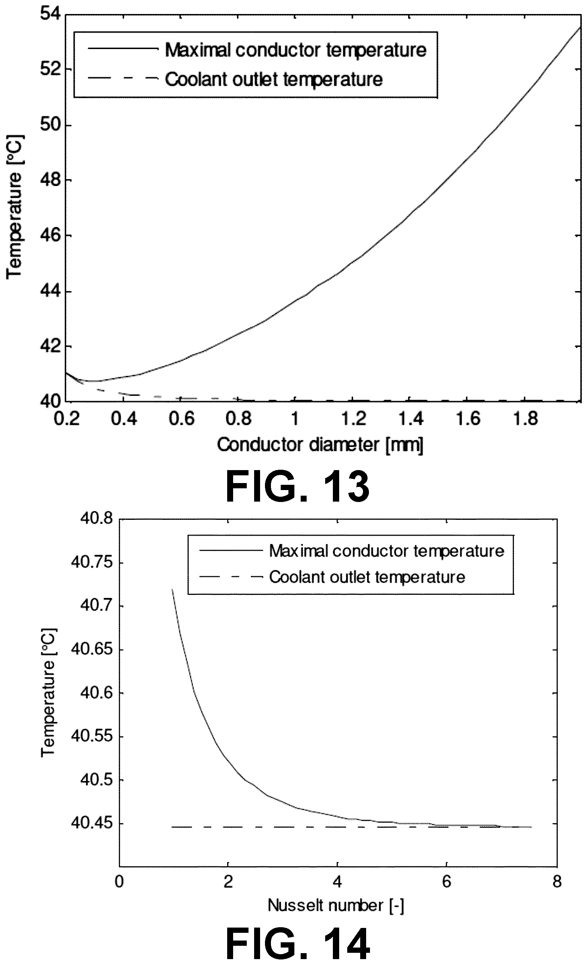

The conductor diameter is varied from 0.2 mm to 2 mm, while the thickness of the insulation layer around the conductor is assumed constant. The change of conductor diameter affects the hydraulic diameter of the channels, a higher conductor diameter results in higher hydraulic diameter channels. The resulting effect on the cooling performance with a fixed pressure drop is again the result of two counteracting effects of decreased heat transfer coefficient and increased flow rate (FIG. 12). The temperature of the winding is below 54 °C for all the simulated conductor diameters, with the lowest temperature occurring for a conductor diameter of about 0.3 mm, as shown in FIG. 13.

The Nusselt number is a parameter which is dependent on the channel geometry. As the channel geometry is not known due to irregular winding patterns and conductor deformation, the Nusselt number is varied from 0.986 to 7.541, which covers most possible channel geometries. The Nusselt number will not have an effect on the flow rate, but will affect the heat transfer coefficient. The variation in the conductor temperature for a fixed pressure drop is shown in FIG. 14. An increase in Nusselt number understandably results in a higher heat transfer coefficient and lower winding temperature. The variation of the temperature with the Nusselt number is very limited (change in temperature is less than 0.5 °C) as in the nominal case the temperature is mostly limited by the temperature rise of the coolant. The winding temperature is lower than 41 °C for all Nusselt numbers.

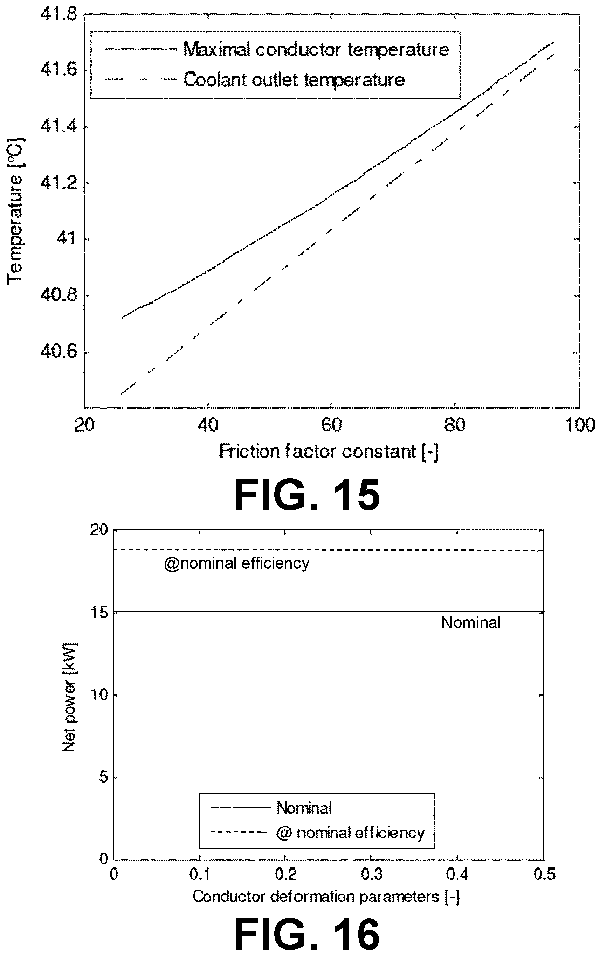

The constant in the friction factor equation is a parameter which is dependent on the channel geometry. As the channel geometry is not known due to irregular winding patterns and conductor deformation, the friction factor constant is varied from 26.012 to 96, which covers most possible channel geometries. The friction factor will not have an effect on the heat transfer coefficient, but will affect the coolant flow rate at constant pressure drop. The variation in the conductor temperature is shown in FIG. 15. An increase in friction factor understandably results in a lower coolant flow rate and a higher winding temperature. For all friction factor constants, the winding temperature remains below 42 °C.

For all the variations simulated in the sensitivity study, only the fill factor had a significant effect on the winding temperature. For fill factors below 80% (which covers most common windings) the maximal winding temperature was below 54 °C, which is a reduction of the temperature difference by a factor of 6 or more compared to water jacket cooling. Due to this reduced temperature, the Joule losses decrease by about 20% and the overall losses reduce by about 12% (not taking into account the effect of the fill factor on the Joule losses).

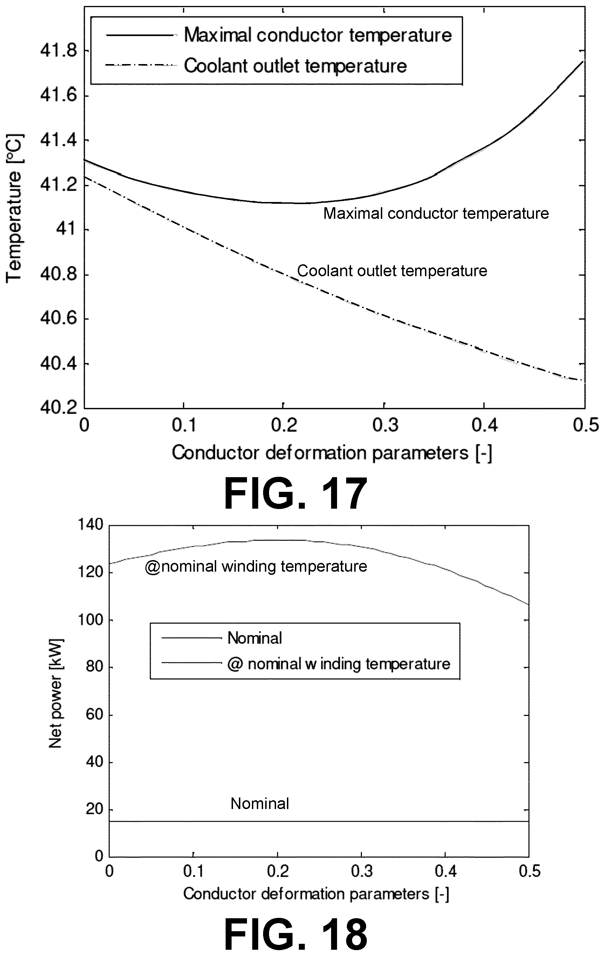

The sensitivity study above indicated that the heat transfer rate can be increased by a factor of 15 or more, thereby significantly lowering the winding temperature for a constant net output power. It is however also interesting to study how well the motor performs when increasing the net power. In the following, two situations are studied: increasing the net power such that the motor efficiency is equal to that of the reference (nominal) case and increasing the net power such that the conductor temperature is equal to the average temperature of the reference (nominal) case. As the conductor deformation is the only variable which is not known for the reference motor, this parameter is analysed as a variable. As the copper losses decrease with the conductor temperature, a higher current and thus a higher power can be fed to the motor. The net power for nominal motor efficiency is shown in FIG. 16. It is nearly independent of the conductor deformation, and increases compared to the nominal case with about 3.8 kW or 25%. The conductor and coolant outlet temperature are plotted in FIG. 17. The conductor temperature remains below 42 °C for all values of the conductor deformation parameter.

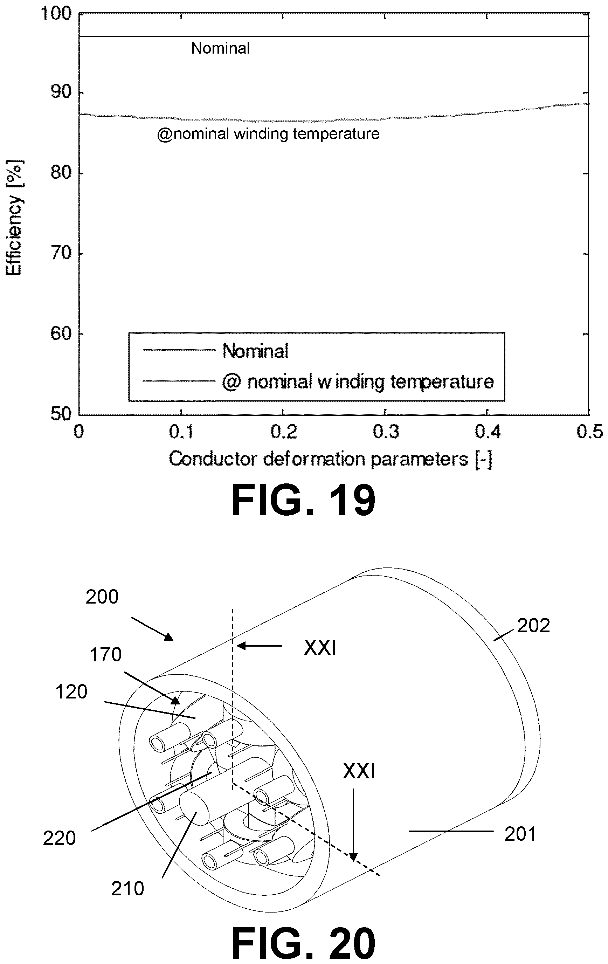

In embodiments of the present invention, the Joule losses can be higher to reach the nominal winding temperature due to a reduced thermal resistance. A higher input current and thus a higher net power can be handled by the motor. FIG. 18 illustrates the net power increase as a function of the conductor deformation. The net power is increased by a factor 7 to 9. However, this will be an overestimation of the actual motor net power due to magnetic saturation of the iron. Other limits on the iron temperature or the mechanical properties are also not taken into account. To optimally profit from the reduced thermal resistance, a new motor design has to be made with less copper and more iron volume. The modelling results however do indicate the large potential of this cooling method. FIG. 19 shows the motor efficiency at nominal winding temperature, which is reduced from the nominal efficiency due to the higher losses, which results from the higher currents through the winding.

In the above example, a motor winding cooling method according to an exemplary embodiment of the present invention was discussed and it was shown that the method has several advantages compared to the current state-of-the-art cooling techniques. High convective heat transfer coefficients, high heat transfer area and no thermal interfaces resistances while maintaining the same copper cross-sectional area are its main advantages. The above described measurements show a good correspondence with the model. The maximal current density applied to the winding is 42.3 A/mm$^2$, during which the winding temperature was 38.2 °C and the coolant pressure drop was lower than 1 bar. The modelling showed that for a reference switched reluctance motor, the thermal resistance between winding and coolant is decreased by a factor 15 or more. This results in a reduction of the Joule losses by 20% when using the same net power. When aiming for a motor with equal efficiency, the net power can be increased by 25%. This factor can even be increased several times when taking the nominal winding temperature as a limiting case, however a redesign of the motor could be done to optimally benefit from the increased heat transfer rate.

In another aspect, the present invention also relates to an electric system or appliance, such as for example an electric motor. The electric system or appliance may be an electromagnetic system. The electric system may be a motor, a generator, a transformer, or alike. According to embodiments of the present invention, the electric system comprises one or more coils according to an embodiment of the first aspect. In some embodiments, the electric system is a concentrated pole electric actuator comprising a cooling circuit and a plurality of coils connected in parallel to the cooling circuit.

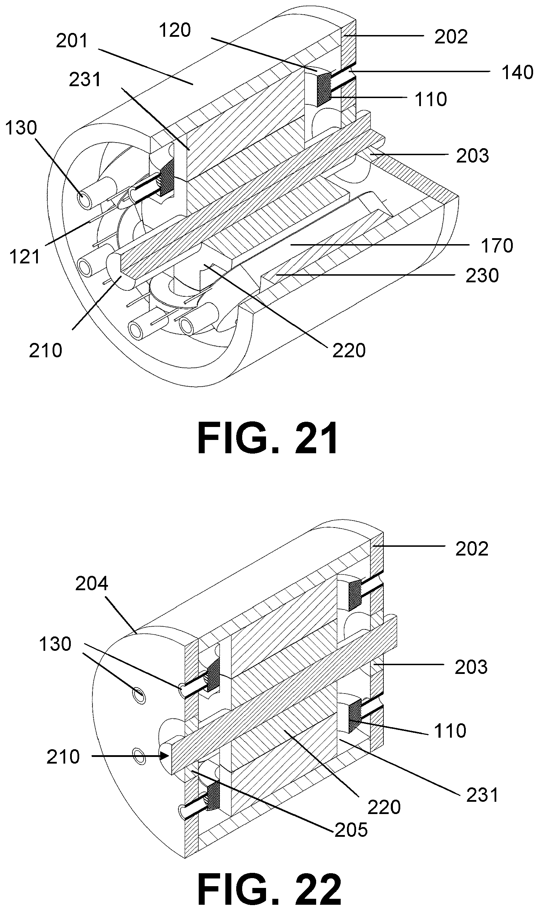

FIG. 20 to FIG. 23 shows different views of a first embodiment of a motor 200 including a plurality of electromagnetic devices 107 according to embodiments of the present invention, where the housing 120 shelters the conductor formed concentrated windings. FIG. 20 shows a perspective view of the motor 200 including a motor housing or frame 201 and showing a backside flange 202. The shaft 210 and rotor 220 are also shown, where a plurality of coils are enclosed in the winding housings 120 and are distributed around the stator iron poles (see below figures). FIG. 21 shows in perspective the cross section indicated by the dashed lines XXI-XXI in FIG. 20, clearly showing a single winding electromagnetic device 170 similar to the one in FIG. 2, with a housing 120 sheltering the wound conductor 110, between a portion of the rotor 220 and a portion of the stator 230 with the stator iron pole 231. The connections 121, of the device 170 are also shown, as well as the inlets 130. The shaft 210 is held on the back side of the motor 200 by the flange 202 via a bearing system 203 which may allow motion of the shaft 210 and rotor 220 relative to the stator 230. The outlet 140 of the device 170 leads to the outside of the motor via the flange 202.

FIG. 22 shows a perspective view of a motor divided in half by the central axis. It shows similar components as in FIG. 20 and FIG. 21, further including a frontal flange or bracket 204 and a bearing system 205, as well as the backside flange 202 and bearing system 203, for holding and allowing rotational motion of the shaft 210 and rotor 220. The inlets 130 of the each single winding device 170 allow fluid to be introduced in the device 170 through apertures in the bracket 204, in a similar manner as the outlets allow evacuation of fluid through the backside flange 202. The bracket 204 may also include an electric system connected to the electrical connections 121, 122 for the conductor 110, these connections 121, 122 being shown in FIG 2 and FIG 21.

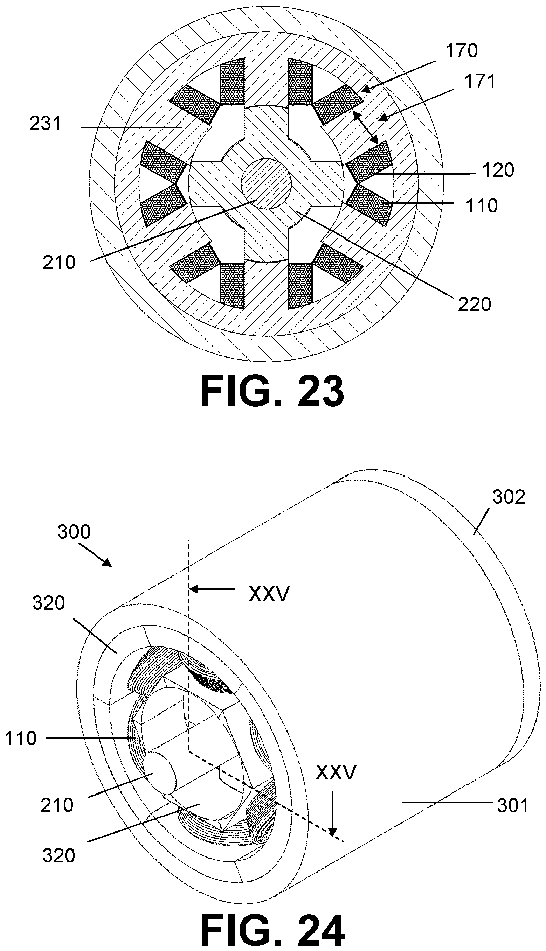

FIG. 23 shows the frontal view of a diametral cross section through the middle of the motor, showing the stator iron poles 231, rotor 220 and shaft 210 as well as the cross sections of the devices 170 in accordance of embodiments of the present invention. Each stator iron pole 231 is fitted inside the central gap 171 of each device 170 as shown in FIG 2. Cooling fluid can be independently introduced through each inlet to cool down different windings as required. The fluid flows through the channels 111 as shown in previous figures, providing an homogeneous cooling of each winding. The cooling fluid is discarded through the outlets 140.

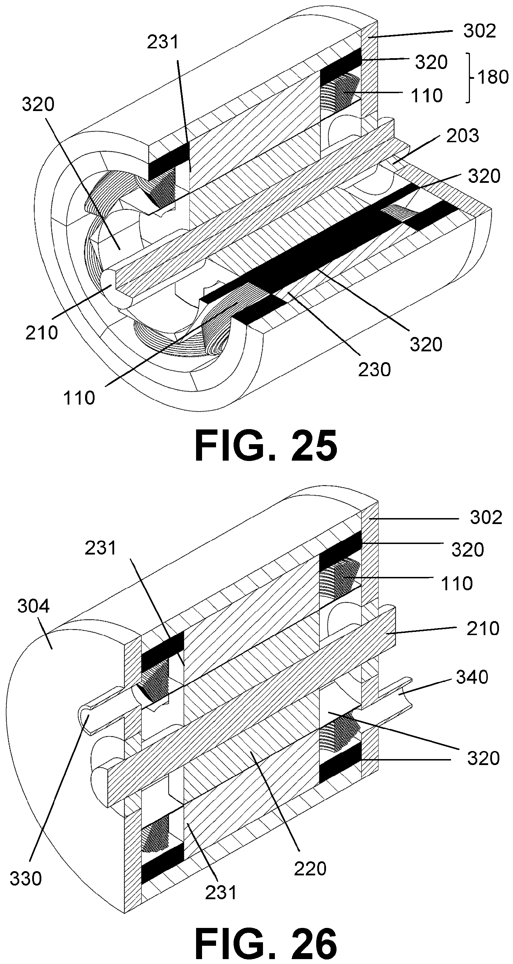

The present invention is not limited to single winding devices, and it may include a distributed winding configuration as explained earlier. Different views of a second embodiment of a motor 300 including an electromagnetic device 180 (see FIG. 25) according to embodiments of the present invention are shown in FIG. 24 to FIG. 27, with concentrated windings but the method is identical to such distributed winding. FIG. 24 shows a perspective view of the motor 300 including a motor housing or frame 301 and showing a backside flange 302. The shaft 210 and rotor may be analogous to the shaft and rotor of the previous embodiment, the motor further including a conductor 110 forming windings. However rather than a housing enclosing each winding, potting material 320 is provided fulfilling the role of a housing. As explained earlier potting material should be provided so it allows cooling fluid to flow through the channels, upon introducing it via an inlet to cool down the conductor 110, said channels being distributed between the windings of the conductor 110, and further allowing the cooling fluid to be evacuated via an outlet (inlet and outlet shown in FIG. 26)

FIG. 25 shows in perspective the cross section indicated by the dashed lines XXV-XXV in FIG. 24, clearly showing the wound conductor 110 around the stator iron poles 231, showing further the potting material 320 separating the windings of the conductor 110. As before, the shaft 210 may be held by the flange 302 via a bearing system 203.

FIG. 26 shows a perspective view of a motor divided in half by the central axis. It shows similar components as in FIG. 24 and FIG. 25, further including a frontal flange or bracket 304. An inlet 330 and outlet 340 are defined by the potting material 320. The motor can receive cooling fluid from the exterior via an inlet, for example a single inlet 330 through the bracket 304. After circulating through the coolant channels 111 formed by the particular stacking of the wound conductor for cooling the conductor, the fluid can be evacuated from the motor via an outlet, for example a single outlet 340 through the backside flange 302. Thus, the distribution of the potting material 320 may be done so that a single inlet 330 respectively a single outlet 340 is provided, which are used to introduce respectively to remove cooling fluid through the cooling channels of all the windings of the motor.

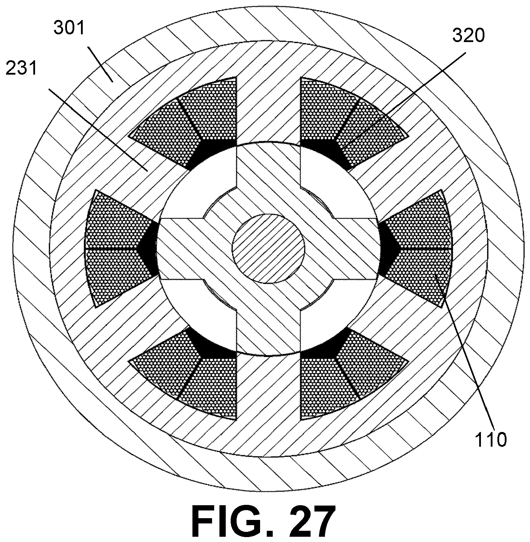

FIG. 27 shows the frontal view of a diametral cross section of the motor of FIG. 24. Each stator iron pole 231 is surrounded by potting material 320 and the wound conductor 110, which leaves a space as a cooling channel 111 in between, analogously to the embodiment of FIG. 2.

The present invention also, in a further aspect, relates to a method for manufacturing an electromagnetic device. The method may be especially suitable for manufacturing an electromagnetic device as described in the first aspect, although embodiments are not limited thereto. According to embodiments of the present invention, the method comprises the steps of winding a conductor in turns to obtain a winding, the conductor 110 being adapted to form, after winding, a plurality of free spaces being formed between turns of the winding, said free spaces forming a plurality of coolant channels 111. It furthermore comprises the step of creating a housing surrounding the winding, the housing comprising an inlet for providing a cooling fluid to the plurality of channels, an outlet for extracting the cooling fluid from the plurality of channels, wherein the housing is configured for containing the cooling fluid and allowing passage of the cooling fluid through the plurality of channels. Creating the housing also may comprise embedding a header structure or temporary dummy structure at the position of the inlet or the outlet and applying a potting material for forming the inlet or the outlet in the housing. Alternatively, rather than using sacrificial elements, use can be made of pre-shaped portions.
Further steps may express manufacturing steps of features of the electromagnetic coil as described in the first aspect of the present invention.

In still another aspect, the present invention relates to a method for cooling a coil in an electric actuator, said method comprising providing a cooling fluid to an inlet and passing the cooling fluid through channels formed by a plurality of free spaces in between parallel portions of a conductor compactly wound as a winding, so that the cooling fluid is in direct contact with the parallel portions of the conductor. The method advantageously can be performed using a coil as described in the first aspect, although the present invention is not limited thereto.

**Claims**

1. An electromagnetic device (100, 170, 180), the device (100, 170, 180) comprising a conductor (110) having an outer electrical insulation layer, the conductor being wound in turns to form a winding,
   **characterized in that**
   the conductor (110) is being adapted to form, after winding, a plurality of free spaces between adjacent turns of the winding, said free spaces forming a plurality of coolant channels (111),
   the device (100, 170, 180) furthermore comprising a housing (120) surrounding the winding, wherein the housing (120) comprises an inlet (130) for providing a cooling fluid to the plurality of coolant channels (111), an outlet (140) for extracting the cooling fluid from the plurality of coolant channels (111), and the housing (120) being configured for containing the cooling fluid and allowing passage of the cooling fluid through the plurality of coolant channels (111).

2. An electromagnetic device according to claim 1, wherein the conductor (110) is wound and shaped to have a fill factor of the winding of at least 60%, for example at least 75%, for example at least 90%.

3. An electromagnetic device according to any of the previous claims, wherein said conductor (110) has a substantially circular, oval or elliptical cross-section.

4. An electromagnetic device according to any of the previous claims, wherein the winding has axial portions (150) and end winding portions (160) and wherein the inlet and the outlet are positioned at the end winding portions.

5. An electromagnetic device according to any of the previous claims, wherein the coolant channels (111) are microfluidic channels.

6. An electromagnetic device according to any of the previous claims, wherein the winding is configured for inducing a laminar flow in the plurality of coolant channels (111).

7. An electromagnetic device according to any of the previous claims, wherein the housing (120) comprises tape wrapped around the winding.

8. An electromagnetic device according to any of the previous claims, wherein the housing (120) is configured to be leakage free and to withstand a fluid pressure from the cooling fluid that is passed through the plurality of coolant channels (111).

9. An electromagnetic device according to any of the previous claims, wherein the housing (120) comprises potting material and wherein the fluid inlet and/or the fluid outlet are formed in the potting material.

10. An electromagnetic device according to any of the previous claims, wherein, when in use, the cooling fluid is in direct thermal contact with said insulation layer on the outside of the conductor.

11. An electromagnetic device according to any of the previous claims, wherein the coil (100) is configured for allowing cooling being a one-phase cooling or a two-phase cooling.

12. An electric system comprising one or more electromagnetic devices (100, 170) according to any of the previous claims.

13. An electric system according to claim 12, wherein the electric system is a concentrated pole electric actuator comprising a cooling circuit and a plurality of electromagnetic devices connected in parallel to the cooling circuit.

14. A method for manufacturing an electromagnetic device, the method comprising, - winding a conductor in turns to obtain a winding, the conductor (110) being adapted to form, after winding, a plurality of free spaces between turns of the winding, said free spaces forming a plurality of coolant channels (111),- creating a housing surrounding the winding, the housing comprising an inlet for providing a cooling fluid to the plurality of channels, an outlet for extracting the cooling fluid from the plurality of channels, wherein the housing is configured for containing the cooling fluid and allowing passage of the cooling fluid through the plurality of channels.

15. A method according to claim 14, wherein creating the housing comprises embedding a header structure or temporary dummy structure at the position of the inlet or the outlet and applying a potting material for forming the inlet or the outlet in the housing.

16. A method for cooling a coil in an electric system, said method comprising providing a cooling fluid to an inlet and passing the cooling fluid through channels formed by a plurality of free spaces in between parallel portions of a conductor wound as a winding, so that the cooling fluid is in direct contact with the turns of the conductor.

**FIG. 1**

**FIG. 2**

120

110

111

171

110

111

# FIG. 3

# FIG. 4

# FIG. 5

# FIG. 6

**FIG. 7**

**FIG. 8**

**FIG. 9**

**FIG. 10**

FIG. 11

FIG. 12

**FIG. 13**

**FIG. 14**

FIG. 15

FIG. 16

**FIG. 17**

**FIG. 18**

**FIG. 19**

**FIG. 20**

**FIG. 21**

**FIG. 22**

**FIG. 23**

**FIG. 24**

**FIG. 25**

**FIG. 26**

FIG. 27

Europäisches
Patentamt

European
Patent Office

Office européen
des brevets

## EUROPEAN SEARCH REPORT

Application Number

EP 20 18 6587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/218314 A1 (MAGNIX TECH PTY LTD [AU]) 6 December 2018 (2018-12-06) * paragraph [0027] * * paragraph [0046] - paragraph [0059] * * paragraph [0071] - paragraph [0072] * * figures 1-10 * | 1-6,8-16 | INV. H02K3/24 H02K9/00 |
| X | US 6 787 948 B2 (BAE SYS CONTROLS INC [US]) 7 September 2004 (2004-09-07) * column 5, line 35 - line 59 * * figure 5 * | 1,3,7, 14,16 | |
| A | WO 2007/040384 A1 (CCM BEHEER BV [NL]; THOOLEN FRANSCISCUS JOHAN MARI [NL] ET AL.) 12 April 2007 (2007-04-12) * first paragraph; page 4 * | 2 | |
| A | US 2002/053839 A1 (MALFA ENRICO [IT] ET AL) 9 May 2002 (2002-05-09) * paragraph [0012] - paragraph [0013] * | 6 | TECHNICAL FIELDS SEARCHED (IPC) |
| A | US 4 227 108 A (WASHIZU TERUO ET AL) 7 October 1980 (1980-10-07) * figure 6 * | 1-16 | H02K |

The present search report has been drawn up for all claims

| Place of search | Date of completion of the search | Examiner |
|---|---|---|
| The Hague | 3 December 2020 | Arpaci, Mutlu |

EPO FORM 1503 03.82 (P04C01)

## ANNEX TO THE EUROPEAN SEARCH REPORT
## ON EUROPEAN PATENT APPLICATION NO.

EP 20 18 6587

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2020

| Patent document cited in search report | | Publication date | Patent family member(s) | | Publication date |
|---|---|---|---|---|---|
| WO 2018218314 | A1 | 06-12-2018 | GB | 2577820 A | 08-04-2020 |
| | | | US | 2020169136 A1 | 28-05-2020 |
| | | | WO | 2018218314 A1 | 06-12-2018 |
| US 6787948 | B2 | 07-09-2004 | NONE | | |
| WO 2007040384 | A1 | 12-04-2007 | EP | 1932226 A1 | 18-06-2008 |
| | | | WO | 2007040384 A1 | 12-04-2007 |
| US 2002053839 | A1 | 09-05-2002 | DE | 69932309 T2 | 12-07-2007 |
| | | | EP | 1017153 A2 | 05-07-2000 |
| | | | IT | MI982858 A1 | 30-06-2000 |
| | | | US | 2002053839 A1 | 09-05-2002 |
| US 4227108 | A | 07-10-1980 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1560313 A2

**Non-patent literature cited in the description**

- **C. WOHLERS et al.** design and direct liquid cooling of tooth-coil windings. *Electrical Engineering,* vol. 100 (4), 2299-2308
- **SIESING et al.** Thermal properties on high fill factor electrical windings : Infiltrated vs non infiltrated. *International Conference on Electrical Machines (ICEM),* 2014

- **NONNEMAN et al.** Advanced lumped parameter model for switched reluctance motors with high performance cooling. *International Heat Transfer Conference,* 2018